# FASCICULE DE BREVET EUROPEEN

(11) **EP 0 626 420 B1**
(45) Date de publication et mention de la délivrance du brevet: **18.04.2001**
(21) Numéro de dépôt: 94401089.1
(22) Date de dépôt: 17.05.1994
(51) Int. Cl.: C08J 7/06, B29C 33/60, C08K 5/10, C10M 105/34

(54) **Utilisation de compositions de formage pour l'entringlage et le détringlage de conduites en elastomère**
Verwendung von Formzusammensetzungen als Entformungsmittel für Elastomerteile.
Use of forming compositions as mould release agents for elastomeric parts

(30) Priorité: 24.05.1993 FR 9306144
(43) Date de publication de la demande: 30.11.1994
(73) Titulaire: TOTAL RAFFINAGE DISTRIBUTION S.A., 92300 Levallois Perret (FR)
(72) Inventeur: Thibault, Michel, F-92300 Levallois-Perret (FR); Degraeve, Thierry, F-91250 Saintry Sur Seine (FR)
(74) Mandataire: Jolly, Jean-Pierre

(56) Documents cités:
- DE-A- 2 556 362
- DE-A- 3 544 112
- US-A- 3 368 917
- US-A- 4 507 418
- US-A- 4 954 537
- DATABASE WPI Derwent Publications Ltd., London, GB; AN 78-81180A[45] & JP-A-53 113 877 (AJINOMOTO KK. ET AL) 4 Octobre 1978

## Description

La présente invention concerne l'utilisation pour l'entringlage et le détringlage de conduites en élastomère, lors de leur fabrication, de compositions de formage utilisées pour la fabrication de pièces en élastomère.

La fabrication de pièces en élastomère naturel ou synthétique nécessite l'emploi d'agents facilitant l'introduction des ébauches de pièces dans la forme et/ou l'extraction de celle-ci des pièces formées. Ces agents sont utilisés, en particulier, pour éviter le collage et donc faciliter l'extraction de ces pièces, lorsqu'elles sont formées par vulcanisation de l'élastomère introduit dans la forme.

Ces agents de formage peuvent être, par exemple, des produits utilisés sous forme de poudre, comme le talc ou le stéarate de zinc. L'emploi de poudres pose cependant des problèmes d'hygiène et de sécurité par suite de leur dispersion dans l'air au cours de la mise en oeuvre.

Une autre possibilité est l'emploi d'agents de formage fluides, comme des huiles de silicone ou des hydrocarbures fluorés, qui ont l'inconvénient d'être des produits chers.

US-A- 4 507 418 concerne des compositions élastomériques, utilisées dans la fabrication de courroies convoyeuses, destinées à éviter l'adhésion de composés collants (ex. : sables huileux).

On emploie dans ces compositions des carboxylates organiques comme des oléates ou stéarates d'alkyle.

DE-A- 3 544 112 concerne des compositions élastomériques de chloroprène, dont la résistance au froid est améliorée par mélange avec un ester.

US-A- 4 954 537 concerne des compositions pour la fabrication d'élastomère de polyuréthane, par un procédé de moulage par injection utilisant comme agent de démoulage un ester d'acide gras.

US-A- 3 368 917 concerne des revêtements protecteurs pour des fils en élastomère, revêtements composés d'un alcool ou d'un ester.

DE-A- 2 556 362 concerne un agent de moulage d'un élastomère composé d'un ester partiel du glycérol et d'un acide gras contenant des groupes OH.

Dans la mesure où, à l'heure actuelle, on tend à réduire l'utilisation dans l'industrie de solvants organiques, on demande aux produits fluides de posséder autant que possible les propriétés suivantes :
- stabilité thermique, pour éviter la dégradation lors de la mise en oeuvre à une température de l'ordre de 180°C ; en effet, en cas de dégradation, il y a formation de dépôts qui s'accumulent sur les formes et modifient les cotes nominales de celles-ci et donc celles des pièces fabriquées ;
- inertie physico-chimique, vis-à-vis de l'élastomère ;
- hydrosolubilité, en raison de la nécessité de laver à l'eau les pièces vulcanisées après formage ;
- biodégradabilité, pour permettre le rejet des eaux de lavage.

La demande de brevet allemand N° 2 556 422 propose ainsi comme agents de démoulage pour élastomères, des esters d'acides gras de sorbitan éthoxylés. Elle revendique plus particulièrement des esters d'acides possédant de 14 à 22 atomes de carbone. Des palmitate, stéarate et oléate de sorbitan polyéthoxylés sont ainsi exemplifiés.

Il n'y a pas d'exemple avec l'ester de l'acide myristique (acide en C14), encore moins avec l'acide laurique (acide en C12), cité par erreur dans le groupe des acides ayant de 14 à 22 atomes de carbone.

Les esters possèdent de préférence de 40 à 80 restes éthoxylés.

Lors d'études qu'elle a effectuées sur les agents de formage d'élastomères, la Demanderesse a constaté que les esters décrits dans le brevet DE 2 556 422 ne sont pas entièrement satisfaisants.

Elle a établi que des esters voisins avaient des propriétés bien meilleures, en particulier pour l'entringlage et le détringlage de conduites (telles que les conduites "Durit") en élastomère. On rappelle que l'entringlage est une opération consistant à mettre en place l'ébauche sur une tringle dont on veut qu'elle adopte la forme par vulcanisation. On réalise ensuite la vulcanisation par chauffage. L'opération de détringlage consiste à enlever la pièce formée vulcanisée, ayant les caractéristiques dimensionnelles et géométriques recherchées.

Le but de la présente invention est donc l'utilisation pour de telles opérations d'agents de formage d'élastomères ayant de bonnes propriétés pour leur mise en oeuvre et ne nuisant pas à l'environnement.

A cet effet, l'invention a pour objet l'utilisation, pour l'entringlage et le détringlage de conduites en élastomère, lors de leur fabrication par vulcanisation d'une ébauche, d'une composition de formage comprenant au moins un premier ester d'un premier acide gras, possédant de 6 à 12 atomes de carbone, et d'un premier alcool comprenant de 6 à 22 atomes de carbone, caractérisée en ce que le premier ester de la composition est choisi dans le groupe constitué par le monolaurate de sorbitol ou le monolaurate de sorbitol éthoxylé.

Selon la forme de mise en oeuvre désirée, en fonction notamment de la pièce d'élastomère à fabriquer, il peut être nécessaire de modifier la consistance du premier ester entrant dans la composition de formage utilisée.

On peut lui ajouter de l'eau, si on désire que la composition de formage soit très fluide. Elle peut contenir ainsi jusqu'à 30 % en poids d'eau.

Si on désire utiliser une composition ayant la consistance d'un fluide visqueux, on pourra par exemple ajouter au premier ester un second ester plus visqueux, de composition chimique voisine, de préférence, pour des raisons de compatibilité.

On peut ajouter par exemple au monolaurate de sorbitol éthoxylé du monolaurate de sorbitol, de telle façon que la composition contienne jusqu'à 40 % en poids de monolaurate de sorbitol.

Dans le cas où la consistance désirée est un gel, on peut ajouter au monolaurate de sorbitol éthoxylé du stéarate de glycérol en proportion telle que la composition peut contenir jusqu'à 20 % en poids de stéarate de glycérol.

Ces compositions de formage peuvent être utilisées pour l'entringlage et le détringlage de conduites composées d'une grande gamme d'élastomères :
- éthylène - propylène monomères (EPM),
- éthylène - propylène - diène - monomères (EPDM),
- silicones éventuellement fluorés,
- épichlorhydrine,
- polychlorure de vinyle/nitrile,
- nitrile butadiène rubber,
- nitrile hydrogéné,
- polychloroprène,
- élastomères fluorés,
- éthylène - acrylique.

Bien entendu, la composition utilisée doit être adaptée à l'élastomère, une composition pouvant convenir pour un ou plusieurs élastomères.

Les conduites peuvent être constituées d'une ou plusieurs couches d'élastomères éventuellement différents.

Les exemples qui suivent sont destinés à illustrer l'invention.

### EXEMPLE 1

Cet exemple concerne :
- d'une part, une composition A utilisable dans le cadre de l'invention et se présentant sous la consistance d'un fluide visqueux,
- d'autre part, des compositions témoins TA1 et TA2, utilisées pour le détringlage d'un tube en élastomère.

La composition A est constituée de 30% en poids de monolaurate de sorbitol et de 70% en poids de monolaurate de sorbitol éthoxylé.

La composition témoin TA1 est constituée de 30% en poids de monooléate de sorbitol et de 70% en poids de monooléate de sorbitol éthoxylé. La composition TA1 a donc une constitution très voisine de la composition A, à l'exception de la nature de l'acide gras précurseur de l'ester, qui possède 18 atomes de carbone, comme décrit dans la demande de brevet allemand N° 2 556 422.

La composition témoin TA2 est un produit commercial constitué d'un polyglycol.

Les essais de détringlage sont effectués de la façon suivante.

On réalise par extrusion une ébauche de tube en EPDM. Cette ébauche est placée (entringlée) dans une forme constituée d'une tringle de diamètre de 20 mm placée dans un moule cylindrique de diamètre de 25 mm. Auparavant, la forme est badigeonnée par le produit à tester.

L'ébauche est ensuite vulcanisée à 180°C pendant 20 minutes.

Les résultats des essais figurent dans le Tableau I ci-après.

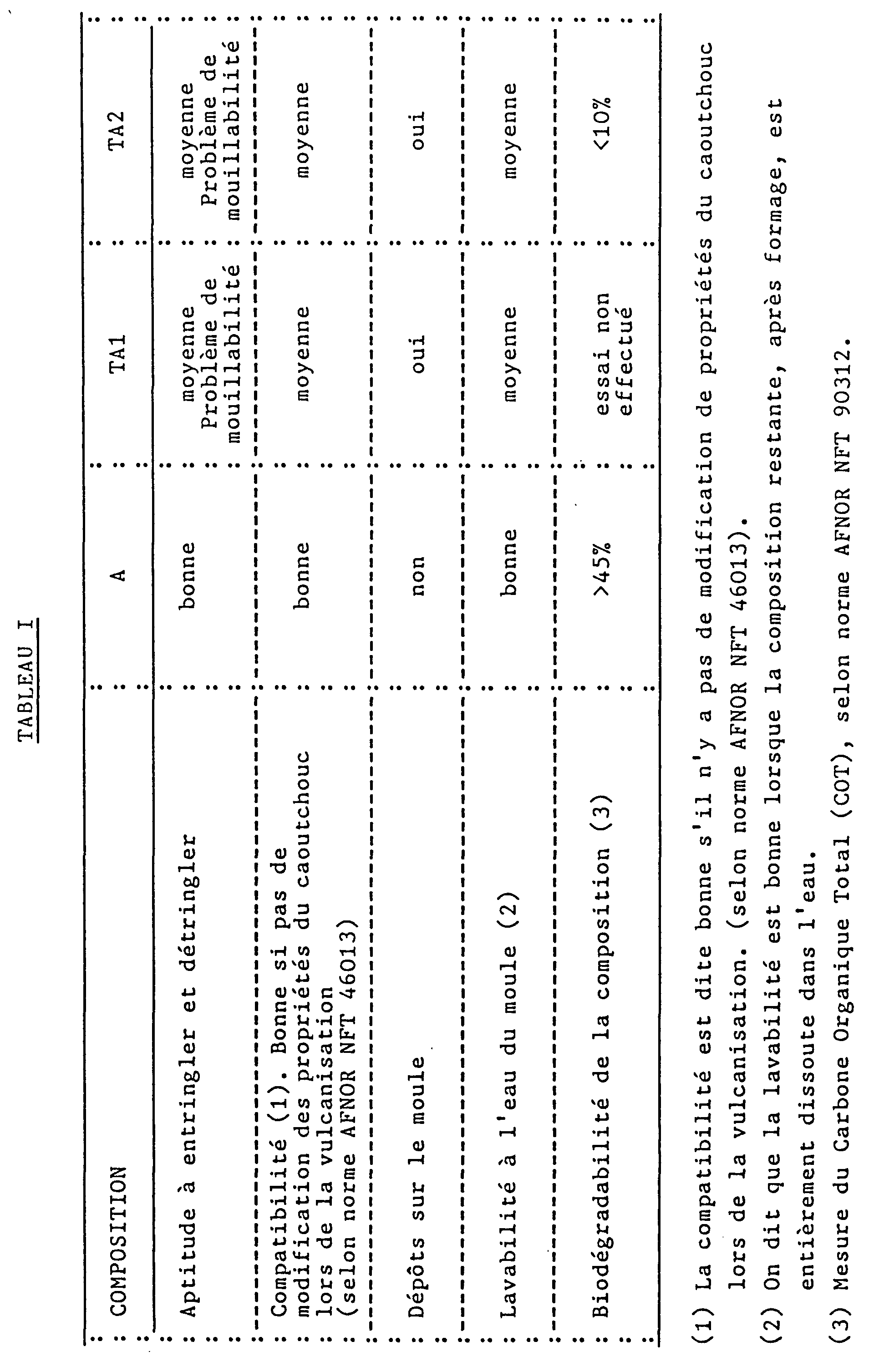

La composition A possède donc les qualités requises pour un bon agent de formage, à la différence des témoins.

### EXEMPLE 2

Cet exemple concerne :
- d'une part, une composition B utilisable dans le cadre de l'invention, ayant la consistance d'un gel et constituée de 88% en poids de monolaurate de sorbitol éthoxylé et de 12% en poids de stéarate de glycérol ;
- d'autre part, une composition témoin TB1 du commerce, constituée d'un polyéthylène glycol lourd.

Les essais sont réalisés de la même façon que dans l'exemple 1, à la différence près que le gel, au lieu d'être badigeonné sur la tringle, est introduit dans la cavité de l'ébauche.

Les résultats figurent dans le Tableau II ci-après.

**TABLEAU II**

| COMPOSITION | B | TB1 |
|---|---|---|
| Aptitude à entringler | bonne | moyenne |
| Compatibilité | bonne | moyenne |
| Dépôts sur le moule | non | oui |
| Lavabilité à l'eau | bonne | moyenne |
| Biodégradabilité de la composition | >35% | <10% |

La composition B possède donc les qualités requises pour un bon agent de formage, à la différence du témoin.

## Revendications

1. Utilisation, pour l'entringlage et le détringlage de conduites en élastomère, lors de leur fabrication par vulcanisation d'une ébauche, d'une composition de formage comprenant au moins un premier ester d'un premier acide gras, possédant de 6 à 12 atomes de carbone, et d'un premier alcool comprenant de 6 à 22 atomes de carbone, caractérisée en ce que le premier ester de la composition est choisi dans le groupe constitué par le monolaurate de sorbitol ou le monolaurate de sorbitol éthoxylé.

2. Utilisation selon la revendication 1, caractérisée en ce que la composition contient, en plus d'un premier ester éthoxylé, de l'eau, de préférence en une quantité inférieur à 50 % en poids de la composition.

3. Utilisation selon l'une des revendications 1 et 2, caractérisée en ce que la composition comprend du monolaurate de sorbitol éthoxylé et du monolaurate de sorbitol.

4. Utilisation selon l'une des revendications 1 et 2, caractérisée en ce que la composition comprend du monolaurate de sorbitol éthoxylé et du stéarate de glycérol.

## Claims

1. Use of a moulding composition for the insertion into a mould and the release from a mould of elastomeric conduits, whilst they are being manufactured by the vulcanisation of a preliminary blank, said composition comprising at least a first ester of a first fatty acid, having 6 to 12 carbon atoms, and at least a first ester of a first alcohol comprising 6 to 22 carbon atoms, characterised in that the first ester of the composition is selected from the group including sorbitol monolaurate or ethoxylated sorbitol monolaurate.

2. Use according to claim 1, characterised in that, in addition to a first ethoxylated ester, the composition contains water, preferably in a quantity of less than 50 % by weight of the composition.

3. Use according to one of claims 1 and 2, characterised in that the composition comprises ethoxylated sorbitol monolaurate and sorbitol monolaurate.

4. Use according to one of claims 1 and 2, characterised in that the composition comprises ethoxylated sorbitol monolaurate and glycerol stearate.

## Patentansprüche

1. Verwendung einer Formzusammensetzung bestehend aus mindestens einem ersten Ester aus einer ersten Fettsäure mit mindestens 6 bis 12 Kohlenstoffatomen und einem ersten Alkohol mit 6 bis 22 Kohlenstoffatomen zum Zwecke des Ein- und Ausformens (ENTRINGLAGE / DETRINGLAGE) von Elastomerrohren bei deren Herstellung durch Vulkanisierung eines Rohlings, dadurch gekennzeichnet, dass der erste Ester der Zusammensetzung aus der aus Sorbitolmonolaurat oder ethoxyliertem Sorbitolmonolaurat bestehenden Gruppe ausgewählt wird.

2. Verwendung nach Anspruch 1, dadurch gekennzeichnet, dass die Zusammensetzung zusätzlich zu einem ersten ethoxylierten Ester Wasser bevorzugt in einer Menge von weniger als 50 Gew.-% der Zusammensetzung enthält.

3. Verwendung nach einem der Ansprüche 1 und 2, dadurch gekennzeichnet, dass die Zusammensetzung ethoxyliertes Sorbitolmonolaurat und Sorbitolmonolaurat enthält.

4. Verwendung nach einem der Ansprüche 1 und 2, dadurch gekennzeichnet, dass die Zusammensetzung ethoxyliertes Sorbitolmonolaurat und Glycerolstearat enthält.
